# EUROPEAN PATENT SPECIFICATION

(11) **EP 4 491 516 B1**
(45) Date of publication and mention of the grant of the patent: **29.04.2026**
(21) Application number: 24184731.8
(22) Date of filing: 26.06.2024
(51) Int. Cl.: B64D 11/06, B60N 2/02

(54) **AIRCRAFT SEAT MOTION CONTROLLER WITH TUNABLE SEAT MOTION SPEED**
FLUGZEUGSITZBEWEGUNGSSTEUERUNG MIT ABSTIMMBARER SITZBEWEGUNGSGESCHWINDIGKEIT
DISPOSITIF DE COMMANDE DE MOUVEMENT DE SIÈGE D'AÉRONEF À VITESSE DE MOUVEMENT DE SIÈGE RÉGLABLE

(30) Priority: 10.07.2023 IN 202311046248; 10.06.2024 US 202418738632
(43) Date of publication of application: 15.01.2025
(73) Proprietor: B/E Aerospace, Inc., Winston-Salem, NC 27105 (US)
(72) Inventor: VENKATA, Suresh Babu Kappa, Bengaluru (IN); ANNUMANDLA, Srikanth, Hyderabad (IN)
(74) Representative: Dehns

(56) References cited:
- US-A1- 2010 066 137
- US-A1- 2021 086 662
- US-B2- 10 029 585
- US-B2- 10 595 637
- US-B2- 9 481 466

## Description

### TECHNICAL FIELD AND BACKGROUND

The present disclosure relates generally to adjustable passenger seats, and more particularly, to a passenger seat motion controller with tunable seat motion speed.

Aircraft seats may be highly adjustable, particularly business class and premium class passenger seats. Seat adjustments may be actuator driven. In some cases, highly adjustable seats may include more than a dozen actuators. Adjustable seat components may include, but are not limited to, the seat pan, backrest, leg rest, armrests, headrest, and lumbar. Each seat component may be segmented to provide further adjustment capability.

Each individual actuator drives component adjustment by, for example, rotational and/or linear motion. Actuators may be independent or dependent, wherein an independent actuator operates as a primary driver and a dependent actuator operates considering the operation of its respective independent actuator(s). Actuators may move at different speeds, and may operate separately or in groups to achieve preset sitting positions, for instance upright for taxi, takeoff, and landing (TTOL), and bed mode during flight, through various intermediate sitting positions.

Motion planning is the process whereby actuators are coordinated to transition the seat between different predefined sitting positions. For example, one motion plan may transition the seat from upright to flat bed, whereas another motion plan may transition the seat from upright to cradle recline. Motion plans consider the available actuators and their performance capabilities in order to program a plan to transition the seat in a smooth, timely, ergonomic, and orchestrated manner.

Different passengers may have different preferences as to how a seat transitions, and also the speed at which the seat transitions. For example, some passengers may feel more comfortable with a slow transition between extreme sitting positions, e.g., full upright to full flat bed, whereas other passengers may be comfortable with faster transitions. Currently, no highly-adjustable passenger seat offers a tunable seat motion speed.

Therefore, what is needed is a seat motion controller that offers the ability for a choice of the seat motion speed, at the start of seat motion and/or during seat motion, to optimize comfortable seat transitions. US 10 595 637 B2 relates to a medical recliner chair. US 2010/066137 A1 discloses a power seat system for a vehicle, which includes an operational switch configured to be operated by an occupant for changing positions and attitudes of a vehicle seat whose positions and attitudes are electrically adjusted, a sensor portion positioned in the vicinity of the operational switch and detecting a hand of the occupant approaching the operational switch without contacting the hand of the occupant, and a control portion changing the positions and attitudes of the vehicle seat by actuating an actuator on the basis of an output from the operational switch, the control portion configured to display an operational display indicating adjusting portions and directions of the vehicle seat, which is adjustable by means of the operational switch on the basis of the output from the sensor portion, at a display device provided in a vehicle.

### BRIEF SUMMARY

In one aspect, embodiments of the inventive concepts disclosed herein are directed to a system for seat motion control. In embodiments, the system is provided in claim 1 and includes a seat including actuators coupled to movable seat components, a seat controller operatively coupled to the actuators, a motion planner communicatively coupled to the seat controller, and an interface operable for entering a sitting position change. In embodiments, the motion planner includes a processor configured to receive a request for a sitting position change from the interface, retrieve from memory a motion plan corresponding to the requested sitting position change, the motion plan including a plurality of way points, wherein each way point includes definite positions of the actuators, receive a request for a transition speed associated with the requested sitting position change, and instruct the seat controller to operate the actuators to execute the requested sitting position change at the requested transition speed.

In some embodiments, the transition speed corresponds to a first predefined time interval and the new transition speed corresponds to a second predefined time interval different from the first predefined time interval.

In some embodiments, the movable seat components include a seat pan, a backrest, and a leg rest, and the actuators include a seat pan actuator, a backrest actuator, and a leg rest actuator.

In some embodiments, the system further includes at least one sensor configured to monitor an environment in which the seat operates, the motion planner is communicatively coupled to the at least one sensor, and the motion planner is further configured to receive outputs from the at least one sensor regarding sensed objects affecting the motion plan, and responsive to the outputs received from the at least one sensor, modify the motion plan and instruct the seat controller to operate the actuators according to the modified motion plan.

In some embodiments, the at least one sensor includes at least one of a millimeter wave (mmWave) radar configured to output to the motion planner a map of an environment in which the seat operates, and a camera configured to output to the motion planner images of the environment in which the seat operates.

In some embodiments, the at least one sensor is configured to detect a transient object affecting the motion plan and modify the motion plan by changing an instruction to the seat controller corresponding to an operating parameter of at least one of the actuators.

In some embodiments, the operating parameter includes at least one of activation, deactivation, power supplied to, and speed.

In some embodiments, the motion planner is a component of the interface.

According to another aspect, embodiments of the inventive concepts disclosed herein are directed to a method for seat motion control in accordance with claim 9.

This summary is provided solely as an introduction to subject matter that is fully described in the following detailed description and drawing figures. This summary should not be considered to describe essential features nor be used to determine the scope of the claims. Moreover, it is to be understood that both the foregoing summary and the following detailed description are explanatory only and are not necessarily restrictive of the subject matter claimed.

### BRIEF DESCRIPTION OF THE DRAWINGS

Implementations of the inventive concepts disclosed herein may be better understood when consideration is given to the following detailed description thereof. Such description refers to the included drawings, which are not necessarily to scale, and in which some features may be exaggerated and some features may be omitted or may be represented schematically in the interest of clarity. Like reference numerals in the drawings may represent and refer to the same or similar element, feature, or function. In the drawings:
FIG. 1 is a block diagram illustrating a system for seat motion control, in accordance with example embodiments of this disclosure;
FIG. 2 is a schematic illustration of a seat environment and dynamic seat motion considering objects and potential entrapment zones in the environment, in accordance with example embodiments of this disclosure;
FIG. 3 is a schematic illustration of the seat environment of FIG. 2 considering human constraints, in accordance with example embodiments of this disclosure;
FIG. 4 is a plot of seat motion paths with different speeds and corresponding numbers of way points, in accordance with example embodiments of this disclosure; and
FIG. 5 is a plot of the seat motion paths with different speeds illustrating a speed change from one speed to another speed, in accordance with example embodiments of this disclosure.

### DETAILED DESCRIPTION

Before explaining at least one embodiment of the inventive concepts disclosed herein in detail, it is to be understood that the inventive concepts are not limited in their application to the details of construction and the arrangement of the components or steps or methodologies set forth in the following description or illustrated in the drawings. In the following detailed description of embodiments of the instant inventive concepts, numerous specific details are set forth in order to provide a more thorough understanding of the inventive concepts. However, it will be apparent to one of ordinary skill in the art having the benefit of the instant disclosure that the inventive concepts disclosed herein may be practiced without these specific details. In other instances, well-known features may not be described in detail to avoid unnecessarily complicating the instant disclosure. The inventive concepts disclosed herein are capable of other embodiments or of being practiced or carried out in various ways. Also, it is to be understood that the phraseology and terminology employed herein is for the purpose of description and should not be regarded as limiting.

As used herein, a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only, and should not be construed to limit the inventive concepts disclosed herein in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of the "a" or "an" are employed to describe elements and components of embodiments of the instant inventive concepts. This is done merely for convenience and to give a general sense of the inventive concepts, and "a" and "an" are intended to include one or at least one and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment of the inventive concepts disclosed herein. The appearances of the phrase "in some embodiments" in various places in the specification are not necessarily all referring to the same embodiment, and embodiments of the inventive concepts disclosed may include one or more of the features expressly described or inherently present herein, or any combination of sub-combination of two or more such features, along with any other features which may not necessarily be expressly described or inherently present in the instant disclosure.

Broadly, embodiments of the inventive concepts disclosed herein are directed to a system for dynamic seat motion and a dynamic seat motion controller. In embodiments, the seat is configured to adjust between different predefined sitting positions, for instance upright for taxi, takeoff, and landing (TTOL), bed mode or "lie-flat" during flight, and various intermediate sitting positions. The seat includes a plurality of actuators for moving physical seat components, and for each predefined sitting position the involved actuators have definite positions. Actuator positions are known and tracked by the seat controller operable for activating the actuators to transition the seat from one sitting position to another sitting position according to instructions from the motion planner as discussed in detail below.

The motion planner considers way points for transitioning between each predefined sitting position. For example, for a seat transition from full upright to full bed mode, the motion plan for achieving the transition may include a predefined number of way points, wherein each way point includes defined positions of the actuators involved in the particular seat transition. The motion planner is configured to achieve the sitting position transition by operating the actuators according to an orchestrated programming such that each actuator is at its predefined position at each of the respective way points. For example, a seat transition may include up to about a dozen way points to complete a transition, wherein each of the involved actuators may operate according to different sequences during the transition, may operate continuously or intermittently during the transition, may operate during only part of the transition, and may operate at different speeds during the different parts of the transition.

The motion planner is tunable in that the passenger, or the carrier, has the ability to choose the transition speed at the start of the seat transition and/or change the speed of the seat transition after the seat transition is already underway. For example, a user may wish to select an initially slow seat transition or an initially fast transition. The user may allow that seat transition to continue at the selected speed until completion. In the event the user determines the transition speed to by uncomfortable or undesirable as being too fast or too slow, the user can change the transition speed on the fly and the motion planner is able to cause the seat controller to execute the change. In embodiments, each predefined speed corresponds to a predefined time interval to complete a transition. As such, changing the speed changes the time to transition the seat.

In some embodiments, the motion planner may be communicatively coupled to sensors and may utilize outputs from the sensors to adjust a motion plan. For example, motions may be adjustable in real-time to account for transient objects entering and exiting the travel path of a physical seat component. The system may include sensors of different types configured to monitor the environment in which the seat operates. The sensors may function to map the environment and detect obstacles present in the travel path of the seat in order to control actuator performance in real-time, and modify actuator parameters as necessary.

In embodiments, the highly-adjustable passenger seat includes a number of actuators, each coupled to at least one seat component. Actuators may be categorized as independent or dependent, wherein independent actuators operate without consideration of another actuator, and dependent actuators operate considering an independent actuator. In embodiments, the motion controller is configured to control actuator performance in real-time to complete the transition from one predefined sitting position to another predefined sitting position by transitioning the seat through the various way points.

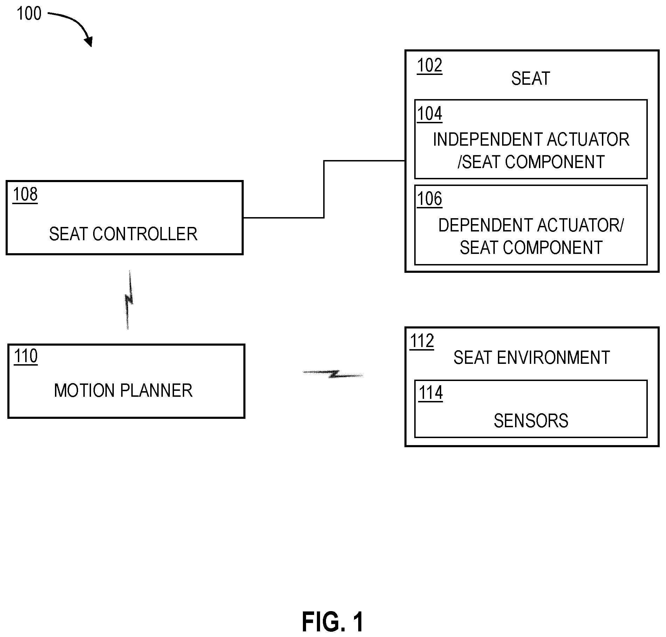

FIG. 1 is a block diagram illustrating a system for seat motion control according to the present disclosure. The system includes a highly-adjustable passenger seat 102, for instance a business or premium class passenger seat in an aircraft. The term "highly-adjustable" as used herein means a seat capable of more than just backrest recline. In embodiments, the passenger seat 102 or simply "seat 102," includes physical components such as a seat pan, a backrest, a leg rest, armrests, a headrest, etc. Each physical component may be movable/position adjustable by at least one of rotation, translation, extension, etc. Movements are made by actuators coupled to their respective seat component. In embodiments, actuators may be configured to provide at least one of rotational and linear motions.

In some embodiments, independent actuators 104 are the primary driving members that initiate seat motions, whereas dependent actuators 106 are secondary drivers whose motion depends on the motion of at least one independent actuator. For example, for a seat including a seat pan, a backrest, and a leg rest, each of which are adjustable, seat pan adjustment may be controlled by an independent actuator whereas backrest and leg rest adjustment may be controlled by separate dependent actuators. As such, when the seat transitions between different predefined sitting positions, the primary driver of the seat adjustment may be the seat pan actuator, and the secondary drivers may include the backrest actuator and the leg rest actuator. Actuators may be grouped to coordinate movements of the various seat components. The seat 102 may include any number of independent and dependent actuators organized into any number of predetermined actuator grouping(s).

The seat 102 is configured to adjust between different predefined sitting positions. Each predefined sitting position corresponds to definite actuator positions for the actuators involved with each respective sitting position. For example, the first definite positions of the involved actuators (e.g., seat pan actuator, backrest actuator, leg rest actuator) may correspond to a first sitting position (e.g., TTOL), whereas different definite positions of the involved actuators (e.g., seat pan actuator, backrest actuator, leg rest actuator) may correspond to a different sitting position (e.g., lie-flat), while intermediate definite positions of the involved actuators may correspond to the different way points along the motion path for achieving the transition from the first sitting position to the second sitting position. The present state of the seat 102, or a position of a particular physical component, may be determined from the current definite position of the involved actuator(s). A seat controller 108 operates to access current definite actuator positions and physically operate the actuators to move each actuator to its next definite actuator position for each successive way point along the motion path. The various predefined sitting positions, motions paths, and way points for each motion path are stored in a motion planner 110. The motion planner 110 is communicatively coupled to the seat controller 108 and instructs the seat controller 108 how to operate the actuators. Predefined sitting positions are selectable by the seat occupant, for instance via a sitting position selector provided on an interactive device communicatively coupled or integral with the motion planner 110.

The seat 102 is configured to be installed in a seat environment 112, for instance an aircraft passenger cabin. The environment may include fixed structures positioned proximate the seat that may affect the movements of the physical seat components, for instance, a seat shell affecting movement of the backrest, ottoman affecting movement of the leg rest, side console, desk, etc. The seat 102 may operate in an environment in which obstacles may be considered. Transient obstacles may also enter and leave the seat environment, for instance people and luggage. These obstacles may also be considered as they affect the travel path of the physical seat components. The environment may include various entrapment zones that may be monitored. For example, entrapment zones may exist between the backrest and the seat shell, between the leg rest and a forward ottoman, between the side of the seat and a console, etc. Obstacles may enter and leave these entrapment zones, and the presence of such obstacles may also be considered.

In embodiments in which the motion planner 110 further monitors the environment, the system 100 may further include at least one sensor 114 of a predefined type. The at least one sensor 114 may be positioned in the immediate seat environment. In some embodiments, the at least one sensor 114 is positioned apart/separate from the seat 102, for instance overhead with respect to the seat 102 such that the field of view of the at least one sensor 114 includes at least the seat 102 and immediately surrounding environment.

In some embodiments, the at least one sensor 114 may include a millimeter wave (mmWave) radar configured to output a map of an environment in which the seat 102 operates, and/or may include a camera or other vision sensor configured to output images of the environment in which the seat 102 operates. In use, the at least one sensor 114 is configured to continuously monitor the environment for objects and object movements. In some embodiments, the at least one sensor 114 is configured to monitor the physical seat components and the seat occupant. In some embodiments, the camera may capture frames to determine object and seat component movements.

In embodiments including at least one sensor 114, the motion planner 110 is communicatively coupled to each of the seat controller 108 and the at least one sensor 112. In some embodiments, the motion planner 110 may be an element or component of the seat controller 108. In embodiments, the motion planner 110 includes a processor configured to access current positions of seat actuators, such as obtained from the seat controller 108, corresponding to a current sitting position of the seat, access future positions of the seat actuators corresponding to a future sitting position of the seat, receive outputs from the at least one sensor 114, and instruct dynamic motion considering the reconciled outputs to be executed by the seat controller 108 to transition the seat 102 from a current sitting position to the selected future sitting position. In some embodiments, reconciling may include considering each of the outputs separately or together/fused.

The current sitting position of the seat 102 corresponds to the seat configuration at the time the seat occupant selects another predefined sitting position. The future sitting position is the selected sitting position different from the current sitting position. For example, a current sitting position may be upright for TTOL, and during flight the seat occupant may wish to change to a different sitting position for more comfort. In embodiments, the system includes a plurality of predefined sitting positions stored in memory, wherein each of the plurality of predefined sitting positions includes definite actuator positions corresponding to that respective defined sitting position. In some embodiments, the transition from the current sitting position to the future sitting position may be preprogrammed to occur at different predefined speeds, e.g., slow, medium, fast, corresponding to different one predefined time intervals, e.g., 10 seconds, 20 seconds, 30 seconds, respectively. The dynamic seat motion controls the necessary actuators to complete the transition from the current sitting position to the future sitting position according to the selected predefined speed. The sequence, speed, etc. by which the actuators operate may be dynamic considering the environment, objects in the environment, and capabilities of the actuators.

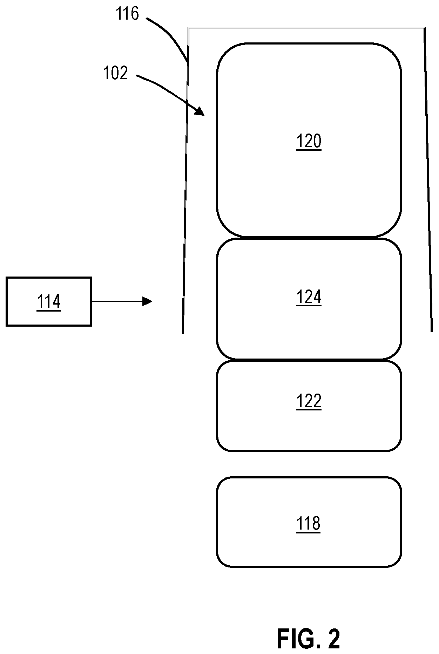

FIG. 2 schematically illustrates the seat 102 operating in an environment including a fixed shell 116 and a movable ottoman 118. Entrapment areas may exist between the fixed shell 116 and the movable backrest 120, and between the movable ottoman 118 and the movable leg rest 122. Each of the backrest 120, leg rest 122, and seat pan 124 are seat elements movable to achieve different predefined sitting positions. In some embodiments, the seat 102 may include n number of actuators for achieving n degrees of freedom. Outputs from the at least one sensor 114 operating in the environment may be fused.

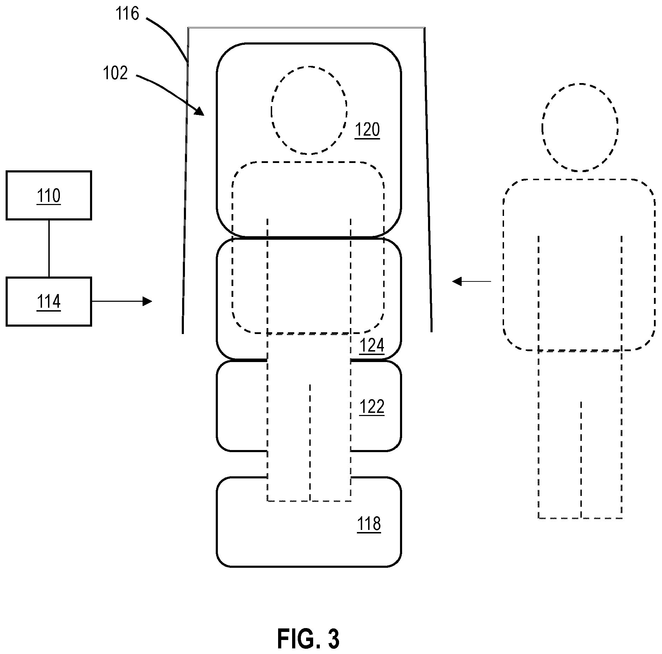

FIG. 3 schematically illustrates the same seat environment shown in FIG. 2 further considering the seat occupant and a transient object, e.g., a person, that may enter and exit the seat environment and affect the travel path of the physical seat components. In some embodiments, the motion planner 110 is configured to receive, determine, instruct, execute, etc. The motion planner 110 may include at least one processor, memory, and a communication interface. The processor provides processing functionality for at least the motion planner 110 and may include any number of processors, micro-controllers, circuitry, field programmable gate array (FPGA) or other processing systems, and resident or external memory for storing data, executable code, and other information accessed or generated by motion planner 110. The processor may execute one or more software programs embodied in a non-transitory computer readable medium (e.g., memory) that implements techniques described herein. The processor is not limited by the materials from which it is formed, or the processing mechanisms employed therein and, as such, can be implemented via semiconductor(s) and/or transistors (e.g., using electronic integrated circuit (IC) components), and so forth.

The memory may be an example of tangible, computer-readable storage medium that provides storage functionality to store various data and/or program code associated with operation of the processor, such as software programs and/or code segments, or other data to instruct the processor, and possibly other components of the controller, to perform the functionality described herein. Thus, the memory can store data, such as a program of instructions for operating the motion planner 110, including its components (e.g., processor, communication interface, etc.), and so forth. It should be noted that while a single memory is described, a wide variety of types and combinations of memory (e.g., tangible, non-transitory memory) may be employed. The memory may be integral with the processor, may comprise stand-alone memory, or may be a combination of both. Some examples of the memory may include removable and non-removable memory components, such as random-access memory (RAM), read-only memory (ROM), flash memory (e.g., a secure digital (SD) memory card, a mini-SD memory card, and/or a micro-SD memory card), solid-state drive (SSD) memory, magnetic memory, optical memory, universal serial bus (USB) memory devices, hard disk memory, external memory, and so forth.

The communication interface may be operatively configured to communicate with components of the motion planner 110. For example, the communication interface may be configured to retrieve data from the processor or other devices, transmit data for storage in the memory, retrieve data from storage in the memory, and so forth. The communication interface may also be communicatively coupled with the processor to facilitate data transfer between components of the motion planner 110 and the processor. It should be noted that while the communication interface is described as a component of the motion planner 110, one or more components of the communication interface may be implemented as external components communicatively coupled to the motion planner 110 via a wired and/or wireless connection. The motion planner 110 may also include and/or connect to one or more input/output (I/O) devices (e.g., human machine interface (HMI) devices) via the communication interface. In embodiments, the communication interface may include a transmitter, receiver, transceiver, physical connection interface, or any combination thereof.

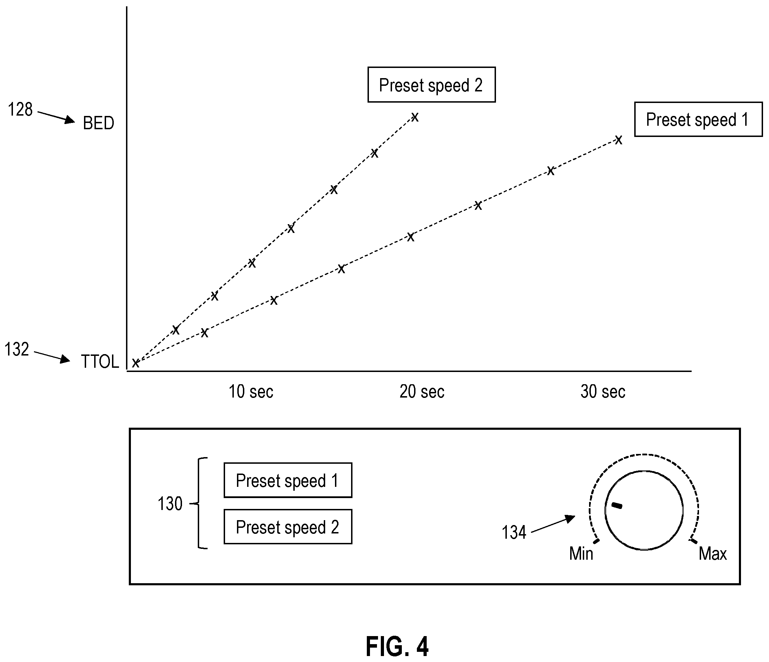

Referring to FIGS. 1 and 4, in use, the motion planner 110 is configured to access, for instance from the seat controller 108, the current sitting position as determined by the current actuator positions. A seat occupant is able to request a new/future sitting position 128 (e.g., bed) from various predefined sitting positions stored in memory, and also a predefined speed from various preset speeds 130 for completing the transition from the current sitting position 132 (e.g., TTOL) to the future sitting position 128 (e.g., bed). As shown in FIG. 4, for example, a preset speed 1 corresponds to a predefined time period of 20 seconds to complete the transition, and a preset speed 2 corresponds to a predefined time period of 30 seconds to complete the transition. Each motion path includes the same number of way points, for example eight as shown; however, the speed and time in which the way points are reached is different for each of the preset speeds. The motion planner 110 accesses the stored motion plan for completing the transition, and selected preset speed, and instructs the seat controller 108 to operate the actuators to complete the transition via the motion path through each of the predefined way points, wherein each predefined way point includes predefined definite actuator positions. In some embodiments, the speed may be tunable via stepless linear adjustment 134.

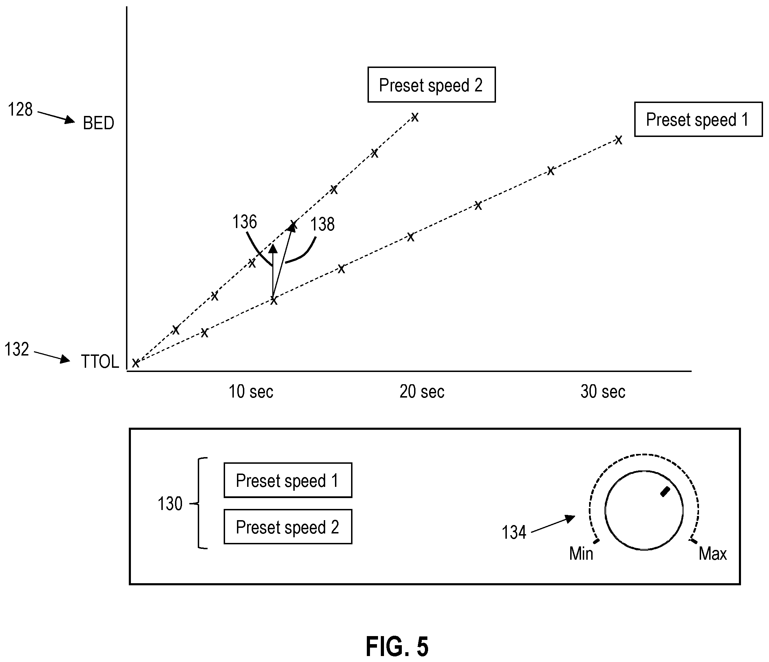

Referring to FIGS. 1 and 5, in use, the motion planner 110 is configured to change the seat transition speed at the request of the user. For example, when initiating a sitting position change, the seat occupant in a current sitting position 132 selects a predefined future sitting position 128 and a preset speed 130 (e.g., preset speed 1) at which the transition is to occur. In some embodiments, each predefined sitting position may be paired with a default speed which can be changed and saved according to user preference. When the seat transition command is entered, the seat transition motion begins with the motion planner 110 instructing the seat controller 108 to further instruct the involved actuators to begin their motions to transition the seat to its first way point. The transition motion continues at the original or default speed until a change of speed is desired by the seat occupant.

Assume, for example, a change of speed is entered at around the 10^{th} second of seat motion as shown at 136, and the change is to increase the speed, for example, from preset speed 1 to present speed 2. Upon receipt of the command, the motion planner 110 processes the command and instructs the seat controller 108 to change the speed through a ramp rate controlled speed as shown at 138 (e.g., quantified rate at which power output varies between two adjacent time intervals) for a smooth transition to the increased speed. Once the increased speed for the new speed selection is reached, the seat motion continues at that speed until completion of the motion or until another different speed is selected. In embodiments, a speed may be saved by the passenger as a speed preset which can be recalled by the passenger if in between the passenger changes to other speeds. In embodiments, a speed preset can be added to a passenger profile and loaded for use on any different flight.

In some embodiments, the motion planner 110 may determine from the monitored environment if any actuator motion will cause a collision or entrapment. If no collision or entrapment is determined, the actuator may continue to move to its next definite way point position. If a collision or entrapment is determined from the environment, the actuators may pause or slow while other actuators not involved with the entrapment may continue. In embodiments, one goal of the motion planner 110 is to complete the transition within the predetermined time period corresponding to the selected predefined speed by adjusting actuator stops, starts, sequences, speeds, etc. (i.e., performance parameters) to accommodate objects affecting seat components motions, while completing the transition in a smooth, comfortable, and ergonomic manner for the seat occupant. Adjustments to actuator performance may be made considering the capabilities of the actuators, type of object detected, continued presence of objects, etc.

## Claims

1. A system (100) for seat motion control, comprising:
a seat (102) including actuators (104, 106) coupled to movable seat components (120, 122, 124);
a seat controller (108) operatively coupled to the actuators;
a motion planner (110) communicatively coupled to the seat controller; and
an interface operable for entering a sitting position change (128, 130) from a user;
wherein the motion planner includes a processor and is configured to:
receive a request for a sitting position change from the interface;
retrieve from memory a motion plan corresponding to the requested sitting position change, the motion plan including a plurality of way points, wherein each way point includes definite positions of the actuators;
receive a request for a transition speed (130, 134) from the interface, wherein the transition speed (130, 134) is associated with the requested sitting position change;
instruct the seat controller to operate the actuators to execute the requested sitting position change at the requested transition speed;
wherein the motion planner (110), during motion of the seat, is further configured to:
receive a request for a new transition speed from the interface; and
instruct the seat controller (108) to operate the actuators to continue executing the sitting position change at the requested new transition speed (130, 134); and
wherein the instruction to the seat controller to operate the actuators to continue executing the sitting position change at the requested new transition speed comprises determining a next way point of the actuators and linearly ramping up or down the speed of the actuators to the new transition speed until the determined next way point is reached, and thereafter continuing at the new transition speed until through completion of the motion plan.

2. The system (100) according to claim 1, wherein the transition speed corresponds to a first predefined time interval and the new transition speed corresponds to a second predefined time interval different from the first predefined time interval.

3. The system (100) according to any preceding claim, wherein the movable seat components include a seat pan (124), a backrest (120), and a leg rest (122), and the actuators include a seat pan actuator, a backrest actuator, and a leg rest actuator.

4. The system (100) according to any preceding claim, wherein:
the system further comprises at least one sensor (114) configured to monitor an environment (112) in which the seat operates;
the motion planner (110) is communicatively coupled to the at least one sensor; and
the motion planner is further configured to:
receive outputs from the at least one sensor regarding sensed objects affecting the motion plan; and
responsive to the outputs received from the at least one sensor, modify the motion plan and instruct the seat controller to operate the actuators according to the modified motion plan.

5. The system (100) according to claim 4, wherein the at least one sensor (114) includes at least one of a millimeter wave (mmWave) radar configured to output to the motion planner a map of an environment in which the seat operates, and a camera configured to output to the motion planner images of the environment in which the seat operates.

6. The system (100) according to claim 4, wherein the at least one sensor (114) is configured to detect a transient object affecting the motion plan and modify the motion plan by changing an instruction to the seat controller corresponding to an operating parameter of at least one of the actuators.

7. The system (100) according to claim 6, wherein the operating parameter includes at least one of activation, deactivation, power supplied to, and speed.

8. The system (100) according to any preceding claim, wherein the motion planner (110) is a component of the interface.

9. A method for seat motion control, comprising the steps of:
providing a seat (102) including actuators (104, 106) coupled to movable seat components (120, 122, 124);
providing a seat controller (108) operatively coupled to the actuators;
providing a motion planner (110), including a processor, communicatively coupled to the seat controller;
providing an interface operable for entering a sitting position change (128, 130) from a user;
receiving, by the motion planner, a request for a sitting position change from the interface;
retrieving, by the motion planner, from memory a motion plan corresponding to the requested sitting position change, the motion plan including a plurality of way points, wherein each way point includes definite positions of the actuators;
receiving, by the motion planner, a request for a transition speed (130, 134) from the interface, wherein the transition speed (130, 134) is associated with the requested sitting position change;
instructing, by the motion planner, the seat controller to operate the actuators to execute the requested sitting position change at the requested transition speed;
receiving, by the motion planner, a request for a new transition speed from the interface;
instructing, by the motion planner, the seat controller to operate the actuators to continue executing the sitting position change at the requested new transition speed; and
wherein the instruction to the seat controller to operate the actuators to continue executing the sitting position change at the requested new transition speed comprises determining a next way point of the actuators and linearly ramping up or down the speed of the actuators to the new transition speed until the determined next way point is reached, and thereafter continuing at the new transition speed until through completion of the motion plan.

10. The method according to claim 9, wherein the transition speed corresponds to a first predefined time interval and the new transition speed corresponds to a second predefined time interval different from the first predefined time interval.

## Patentansprüche

1. System (100) zur Sitzbewegungssteuerung, umfassend:
einen Sitz (102), der Aktuatoren (104, 106) einschließt, die mit beweglichen Sitzkomponenten (120, 122, 124) gekoppelt sind;
eine Sitzsteuereinheit (108), die wirkmäßig mit den Aktuatoren gekoppelt ist;
einen Bewegungsplaner (110), der kommunikativ mit der Sitzsteuereinheit gekoppelt ist; und
eine Schnittstelle, die betreibbar ist, um eine Sitzpositionsänderung (128, 130) von einem Benutzer einzugeben;
wobei der Bewegungsplaner einen Prozessor einschließt und konfiguriert ist zum:
Empfangen einer Anforderung für eine Sitzpositionsänderung von der Schnittstelle;
Abrufen eines Bewegungsplans, der der angeforderten Sitzpositionsänderung entspricht, aus dem Speicher, wobei der Bewegungsplan eine Vielzahl von Wegpunkten einschließt, wobei jeder Wegpunkt definierte Positionen der Aktuatoren einschließt;
Empfangen einer Anforderung für eine Übergangsgeschwindigkeit (130, 134) von der Schnittstelle, wobei die Übergangsgeschwindigkeit (130, 134) mit der angeforderten Sitzpositionsänderung assoziiert ist;
Anweisen der Sitzsteuereinheit, die Aktuatoren zu betreiben, um die angeforderte Sitzpositionsänderung mit der angeforderten Übergangsgeschwindigkeit auszuführen;
wobei der Bewegungsplaner (110) während der Bewegung des Sitzes ferner konfiguriert ist zum:
Empfangen einer Anforderung für eine neue Übergangsgeschwindigkeit von der Schnittstelle; und
Anweisen der Sitzsteuereinheit (108), die Aktuatoren zu betreiben, um das Ausführen der Sitzpositionsänderung mit der angeforderten neuen Übergangsgeschwindigkeit (130, 134) fortzusetzen; und
wobei die Anweisung an die Sitzsteuereinheit, die Aktuatoren zu betreiben, um das Ausführen der Sitzpositionsänderung mit der angeforderten neuen Übergangsgeschwindigkeit fortzusetzen, das Bestimmen eines nächsten Wegpunkts der Aktuatoren und das lineare Erhöhen oder Verringern der Geschwindigkeit der Aktuatoren auf die neue Übergangsgeschwindigkeit, bis der bestimmte nächste Wegpunkt erreicht ist, und danach das Fortsetzen mit der neuen Übergangsgeschwindigkeit bis zum Abschluss des Bewegungsplans umfasst.

2. System (100) nach Anspruch 1, wobei die Übergangsgeschwindigkeit einem ersten vordefinierten Zeitintervall entspricht und die neue Übergangsgeschwindigkeit einem zweiten vordefinierten Zeitintervall entspricht, das sich von dem ersten vordefinierten Zeitintervall unterscheidet.

3. System (100) nach einem der vorhergehenden Ansprüche, wobei die beweglichen Sitzkomponenten eine Sitzfläche (124), eine Rückenlehne (120) und eine Beinstütze (122) einschließen und die Aktuatoren einen Sitzflächenaktuator, einen Rückenlehnenaktuator und einen Beinstützenaktuator einschließen.

4. System (100) nach einem der vorhergehenden Ansprüche, wobei:
das System ferner mindestens einen Sensor (114) umfasst, der konfiguriert ist, um eine Umgebung (112) zu überwachen, in der der Sitz arbeitet;
der Bewegungsplaner (110) kommunikativ mit dem mindestens einen Sensor gekoppelt ist; und
der Bewegungsplaner ferner konfiguriert ist zum:
Empfangen von Ausgaben von dem mindestens einen Sensor bezüglich erfasster Objekte, die den Bewegungsplan beeinflussen; und
als Reaktion auf die von dem mindestens einen Sensor empfangenen Ausgaben, Modifizieren des Bewegungsplans und Anweisen der Sitzsteuereinheit, die Aktuatoren gemäß dem modifizierten Bewegungsplan zu betreiben.

5. System (100) nach Anspruch 4, wobei der mindestens eine Sensor (114) mindestens eines von einem Millimeterwellen-Radar (mmWave-Radar), das konfiguriert ist, um an den Bewegungsplaner eine Karte einer Umgebung auszugeben, in der der Sitz arbeitet, und einer Kamera, die konfiguriert ist, um an den Bewegungsplaner Bilder der Umgebung auszugeben, in der der Sitz arbeitet, einschließt.

6. System (100) nach Anspruch 4, wobei der mindestens eine Sensor (114) konfiguriert ist, um ein vorübergehendes Objekt zu erfassen, das den Bewegungsplan beeinflusst, und den Bewegungsplan durch Ändern einer Anweisung an die Sitzsteuereinheit, die einem Betriebsparameter von mindestens einem der Aktuatoren entspricht, zu modifizieren.

7. System (100) nach Anspruch 6, wobei der Betriebsparameter mindestens eines von Aktivierung, Deaktivierung, zugeführter Leistung und Geschwindigkeit einschließt.

8. System (100) nach einem der vorhergehenden Ansprüche, wobei der Bewegungsplaner (110) eine Komponente der Schnittstelle ist.

9. Verfahren zur Sitzbewegungssteuerung, umfassend die Schritte:
Bereitstellen eines Sitzes (102), der Aktuatoren (104, 106) einschließt, die mit beweglichen Sitzkomponenten (120, 122, 124) gekoppelt sind;
Bereitstellen einer Sitzsteuereinheit (108), die wirkmäßig mit den Aktuatoren gekoppelt ist;
Bereitstellen eines Bewegungsplaners (110), der einen Prozessor einschließt und kommunikativ mit der Sitzsteuereinheit gekoppelt ist;
Bereitstellen einer Schnittstelle, die betreibbar ist, um eine Sitzpositionsänderung (128, 130) von einem Benutzer einzugeben; Empfangen einer Anforderung für eine Sitzpositionsänderung von der Schnittstelle durch den Bewegungsplaner;
Abrufen eines Bewegungsplans, der der angeforderten Sitzpositionsänderung entspricht, aus dem Speicher durch den Bewegungsplaner, wobei der Bewegungsplan eine Vielzahl von Wegpunkten einschließt, wobei jeder Wegpunkt definierte Positionen der Aktuatoren einschließt;
Empfangen einer Anforderung für eine Übergangsgeschwindigkeit (130, 134) von der Schnittstelle durch den Bewegungsplaner, wobei die Übergangsgeschwindigkeit (130, 134) mit der angeforderten Sitzpositionsänderung assoziiert ist;
Anweisen der Sitzsteuereinheit durch den Bewegungsplaner, die Aktuatoren zu betreiben, um die angeforderte Sitzpositionsänderung mit der angeforderten Übergangsgeschwindigkeit auszuführen;
Empfangen einer Anforderung für eine neue Übergangsgeschwindigkeit von der Schnittstelle durch den Bewegungsplaner;
Anweisen der Sitzsteuereinheit durch den Bewegungsplaner, die Aktuatoren zu betreiben, um das Ausführen der Sitzpositionsänderung mit der angeforderten neuen Übergangsgeschwindigkeit fortzusetzen; und
wobei die Anweisung an die Sitzsteuereinheit, die Aktuatoren zu betreiben, um das Ausführen der Sitzpositionsänderung mit der angeforderten neuen Übergangsgeschwindigkeit fortzusetzen, das Bestimmen eines nächsten Wegpunkts der Aktuatoren und das lineare Erhöhen oder Verringern der Geschwindigkeit der Aktuatoren auf die neue Übergangsgeschwindigkeit, bis der bestimmte nächste Wegpunkt erreicht ist, und danach das Fortsetzen mit der neuen Übergangsgeschwindigkeit bis zum Abschluss des Bewegungsplans umfasst.

10. Verfahren nach Anspruch 9, wobei die Übergangsgeschwindigkeit einem ersten vordefinierten Zeitintervall entspricht und die neue Übergangsgeschwindigkeit einem zweiten vordefinierten Zeitintervall entspricht, das sich von dem ersten vordefinierten Zeitintervall unterscheidet.

## Revendications

1. Système (100) de commande de mouvement de siège, comprenant :
un siège (102) comportant des actionneurs (104, 106) couplés à des composants de siège mobiles (120, 122, 124) ;
un dispositif de commande de siège (108) couplé fonctionnellement aux actionneurs ;
un planificateur de mouvement (110) couplé de façon à communiquer avec le dispositif de commande de siège ; et
une interface permettant à un utilisateur de saisir un changement de position assise (128, 130) ;
dans lequel le planificateur de mouvement comporte un processeur et est configuré pour :
recevoir une demande de changement de position assise depuis l'interface ;
récupérer dans la mémoire un plan de mouvement correspondant au changement de position assise demandé, le plan de mouvement comportant une pluralité de points de passage, chaque point de passage comportant des positions définies des actionneurs ;
recevoir une demande de vitesse de transition (130, 134) depuis l'interface, la vitesse de transition (130, 134) étant associée au changement de position assise demandé ;
ordonner au dispositif de commande de siège d'actionner les actionneurs pour exécuter le changement de position assise demandé à la vitesse de transition demandée ;
dans lequel le planificateur de mouvement (110), pendant le mouvement du siège, est en outre configuré pour :
recevoir une demande de nouvelle vitesse de transition depuis l'interface ; et
ordonner au dispositif de commande de siège (108) d'actionner les actionneurs pour continuer à exécuter le changement de position assise à la nouvelle vitesse de transition demandée (130, 134) ; et
dans lequel l'instruction donnée au dispositif de commande de siège d'actionner les actionneurs afin de continuer à exécuter le changement de position assise à la nouvelle vitesse de transition demandée comprend les étapes consistant à déterminer un point de passage suivant des actionneurs et à augmenter ou
diminuer de façon linéaire la vitesse des actionneurs jusqu'à la nouvelle vitesse de transition, jusqu'à atteindre le point de passage suivant déterminé, puis à continuer à la nouvelle vitesse de transition jusqu'à l'achèvement du plan de mouvement.

2. Système (100) selon la revendication 1, dans lequel la vitesse de transition correspond à un premier intervalle de temps prédéfini et la nouvelle vitesse de transition correspond à un second intervalle de temps prédéfini différent du premier intervalle de temps prédéfini.

3. Système (100) selon une quelconque revendication précédente, dans lequel les composants de siège mobiles comportent une assise (124), un dossier (120) et un repose-jambes (122), et les actionneurs comportent un actionneur d'assise, un actionneur de dossier et un actionneur de repose-jambes.

4. Système (100) selon une quelconque revendication précédente, dans lequel :
le système comprend en outre au moins un capteur (114) configuré pour surveiller un environnement (112) dans lequel le siège fonctionne ;
le planificateur de mouvement (110) est couplé de façon à communiquer avec l'au moins un capteur ; et
le planificateur de mouvement est en outre configuré pour :
recevoir les données en sortie de l'au moins un capteur concernant des objets détectés affectant le plan de mouvement ; et
en réponse aux données en sortie reçues de l'au moins un capteur, modifier le plan de mouvement et ordonner au dispositif de commande de siège d'actionner les actionneurs conformément au plan de mouvement modifié.

5. Système (100) selon la revendication 4, dans lequel l'au moins un capteur (114) comporte au moins l'un d'un radar à ondes millimétriques (mmWave) configuré pour délivrer au planificateur de mouvement une carte de l'environnement dans lequel le siège fonctionne, et d'une caméra configurée pour délivrer au planificateur de mouvement des images de l'environnement dans lequel le siège fonctionne.

6. Système (100) selon la revendication 4, dans lequel l'au moins un capteur (114) est configuré pour détecter un objet transitoire affectant le plan de mouvement et modifier le plan de mouvement en modifiant une instruction adressée au dispositif de commande de siège correspondant à un paramètre de fonctionnement d'au moins l'un des actionneurs.

7. Système (100) selon la revendication 6, dans lequel le paramètre de fonctionnement comporte au moins l'un de l'activation, la désactivation, l'alimentation en énergie et la vitesse.

8. Système (100) selon une quelconque revendication précédente, dans lequel le planificateur de mouvement (110) est un composant de l'interface.

9. Procédé de commande de mouvement de siège, comprenant les étapes de :
fourniture d'un siège (102) comportant des actionneurs (104, 106) couplés à des composants de siège mobiles (120, 122, 124) ;
fourniture d'un dispositif de commande de siège (108) couplé fonctionnellement aux actionneurs ;
fourniture d'un planificateur de mouvement (110), comportant un processeur, couplé de façon à communiquer avec le dispositif de commande de siège ;
fourniture d'une interface permettant à un utilisateur de saisir un changement de position assise (128, 130) ;
réception par le planificateur de mouvement d'une demande de changement de position assise depuis l'interface ;
récupération dans la mémoire, par le planificateur de mouvement, d'un plan de mouvement correspondant au changement de position assise demandé, le plan de mouvement comportant une pluralité de points de passage, chaque point de passage comportant des positions définies des actionneurs ;
réception, par le planificateur de mouvement, d'une demande de vitesse de transition (130, 134) depuis l'interface, la vitesse de transition (130, 134) étant associée au changement de position assise demandé ;
instruction donnée par le planificateur de mouvement au dispositif de commande de siège d'actionner les actionneurs pour exécuter le changement de position assise demandé à la vitesse de transition demandée ;
réception par le planificateur de mouvement d'une demande de nouvelle vitesse de transition depuis l'interface ;
instruction donnée par le planificateur de mouvement au dispositif de commande de siège d'actionner les actionneurs pour continuer à exécuter le changement de position assise à la nouvelle vitesse de transition demandée ; et
dans lequel l'instruction donnée au dispositif de commande de siège d'actionner les actionneurs afin de continuer à exécuter le changement de position assise à la nouvelle vitesse de transition demandée comprend les étapes consistant à déterminer un point de passage suivant des actionneurs et à augmenter ou diminuer de façon linéaire la vitesse des actionneurs jusqu'à la nouvelle vitesse de transition, jusqu'à atteindre le point de passage suivant déterminé, puis à continuer à la nouvelle vitesse de transition jusqu'à l'achèvement du plan de mouvement.

10. Procédé selon la revendication 9, dans lequel la vitesse de transition correspond à un premier intervalle de temps prédéfini et la nouvelle vitesse de transition correspond à un second intervalle de temps prédéfini différent du premier intervalle de temps prédéfini.
